(19) Europäisches Patentamt
European Patent Office
Office européen des brevets

(11) **EP 2 211 044 B1**

(12) **EUROPEAN PATENT SPECIFICATION**

(45) Date of publication and mention
of the grant of the patent:
**23.01.2013 Bulletin 2013/04**

(51) Int Cl.:
*F02D 41/00* (2006.01)  *F02M 25/07* (2006.01)
*F02D 41/14* (2006.01)  *F02D 41/06* (2006.01)

(21) Application number: **09179030.3**

(22) Date of filing: **14.12.2009**

(54) **EGR controller and EGR control method for internal combustion engine**

AGR-Steuerung und AGR-Steuerverfahren für Verbrennungsmotoren

Contrôleur EGR et procédé de contrôle EGR pour moteur à combustion interne

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **21.01.2009 JP 2009011207**

(43) Date of publication of application:
**28.07.2010 Bulletin 2010/30**

(73) Proprietor: **Honda Motor Co., Ltd.
Tokyo 107-8556 (JP)**

(72) Inventors:
• **Iwadare, Mitsuhiro**
**Saitama 351-0193 (JP)**
• **Ogawa, Masahito**
**Saitama 351-0193 (JP)**
• **Andou, Hirokazu**
**Saitama 351-0193 (JP)**

(74) Representative: **Herzog, Markus et al
Weickmann & Weickmann
Patentanwälte
Postfach 86 08 20
81635 München (DE)**

(56) References cited:
JP-A- 2007 127 037      US-A1- 2007 220 864
US-A1- 2008 022 972

• WANG ET AL: "Air fraction estimation for multiple combustion mode diesel engines with dual-loop EGR systems" CONTROL ENGINEERING PRACTICE, PERGAMON PRESS, OXFORD, GB, vol. 16, no. 12, 1 December 2008 (2008-12-01), pages 1479-1486, XP024529877 ISSN: 0967-0661 [retrieved on 2008-06-10]
• HADLER J ET AL: "Der neue 2,0-l-TDI-Motor von Volkswagen fuer niedrigste Abgasgrenzwerte - Teil 1" MTZ MOTORTECHNISCHE ZEITSCHRIFT, VIEWEG VERLAG, WIESBADEN, DE, vol. 69, no. 5, 1 May 2008 (2008-05-01), pages 386-395, XP001518704 ISSN: 0024-8525

**Description**

BACKGROUND OF THE INVENTION

Field of the Invention

The present invention relates to an EGR controller and an EGR control method for an internal combustion engine, for controlling an EGR that recirculates part of exhaust gases to an intake passage.

Description of the Related Art

Conventionally, there has been proposed an EGR controller for an internal combustion engine in Japanese Laid-Open Patent Publication (Kokai) No. 2007-127037. This engine includes a supercharger, a high-pressure EGR device, and a low-pressure EGR device. The supercharger is comprised of a turbine disposed in an exhaust passage, a compressor disposed in an intake passage for rotation in unison with the turbine, and so forth. Further, both the high-pressure EGR device and the low-pressure EGR device are for recirculating part of exhaust gases to the intake passage. The high-pressure EGR device is comprised of a high-pressure EGR passage connected to a portion of the exhaust passage upstream of the turbine and a portion of the intake passage downstream of the compressor, and a high-pressure EGR control valve disposed in the high-pressure EGR passage. Further, the low-pressure EGR device is comprised of a low-pressure EGR passage connected to a portion of the exhaust passage downstream of the turbine and a portion of the intake passage upstream of the compressor, and a low-pressure EGR control valve disposed in the low-pressure EGR passage.

This EGR controller controls the respective degrees of opening of the high-pressure EGR control valve and opening of the low-pressure EGR control valve in accordance with the rotational speed of the engine etc. to thereby control the amount of exhaust gases recirculated to the intake passage. More specifically, when the rotational speed of the engine is low and at the same time the load thereon is low, a target oxygen concentration is calculated in accordance with the rotational speed of the engine and an accelerator pedal opening. Then, the degrees of opening of both the high-pressure EGR control valve and the low-pressure EGR control valve are controlled such that the oxygen concentration of intake air flowing through a section of the intake passage downstream of the portion connected to the high-pressure EGR passage becomes equal to the target oxygen concentration. On the other hand, when the rotational speed of the engine and the load thereon are both high, the high-pressure EGR control valve and the low-pressure EGR control valve are both controlled to be fully closed so as to inhibit the recirculation of exhaust gases.

As described above, in the conventional EGR controller, the degrees of opening of the low-pressure EGR control valve and opening of the high-pressure EGR control valve are changed depending on operating conditions, such the rotational speed, of the engine. However, since the low-pressure EGR passage is connected to a portion of the intake passage upstream of the portion connected to the high-pressure EGR passage, the distance from the portion of the intake passage connected to the low-pressure EGR passage to a combustion chamber is relatively long, so that response delay of exhaust gases becomes large. For this reason, even when the degree of opening of the low-pressure EGR control valve is changed in accordance with a change in the operating conditions of the engine, due to the influence of response delay of exhaust gases, the oxygen concentration of intake air supplied to the combustion chamber does not immediately follows up the target oxygen concentration. As a result, the combustion state of the engine sometimes becomes unstable, and in such a case, exhaust emissions are increased and drivability is degraded. Especially when the amount of exhaust gas recirculation is large and the oxygen concentration is too low, a misfire can occur. Also, during acceleration of the engine, oxygen required for combustion becomes short, which reduces the acceleration responsiveness, resulting in degraded drivability.

Further, in the conventional EGR controller, when the rotational speed of the engine and the load thereon are high, the recirculation of exhaust gases is inhibited. However, when the rotational speed of the engine and the load thereon are high, the amount of generated NOx tends to increase due to high combustion temperatures, and hence by inhibiting the recirculation of exhaust gases under such operating conditions of the engine, a larger amount of NOx is generated.

WANG ET AL: "Air fraction estimation for multiple combustion mode diesel engines with dual-loop EGR systems" CONTROL ENGINEERING PRACTICE, PERGAMON PRESS, OXFORD, GB, vol. 16, no. 12, 1 December 2008 (2008-12-01), pages 1479-1486, XP024529877 ISS: 0967-0661 [retrieved on 2008-06-10] discloses the features defined in the preamble of enclosed claims 1 and 6. The oxygen concentration in each section of the dual-loop EGR system is estimated by a system modelling.

HADLER J ET AL: "Der neue 2,0-I-TDI-Motor von Volkswagen für niedrigste Abgasgrenzwerte - Teil 1" MTZ MOTORTECHNISCHE ZEITSCHRIFT, VIEWEG VERLAG, WIESBADEN, DE, vol. 69, no. 5, 1 May 2008 (2008-05-01), pages 386-395, XP001518704 ISSN: 0024-8525 shows a dual-loop EGR system with high and low pressure EGR passages. At low temperature conditions and during rapid load variations, the high pressure EGR proportion is increased.

SUMMARY OF THE INVENTION

It is an object of the present invention to provide an EGR controller and an EGR control method for an internal combustion engine, which are capable of maintaining reduced exhaust emissions and excellent drivability while achieving the maximum effect of suppression of NOx generation.

To attain the above object, in a first aspect of the present invention, there is provided an EGR controller for an internal combustion engine in accordance with claim 1.

The engine includes a first EGR passage connected to an intake passage and an exhaust passage, for recirculating part of exhaust gases discharged into the exhaust passage, to the intake passage, a second EGR passage connected to a portion of the intake passage upstream of a portion thereof connected to the first EGR passage and a portion of the exhaust passage downstream of a portion thereof connected to the first EGR passage, for recirculating part of exhaust gases to the intake passage, and an EGR control valve disposed in at least one of the intake passage at a location in a vicinity of the portion connected to the second EGR passage, and the second EGR passage. The EGR controller comprises exhaust gas recirculation amount control means for controlling an amount of exhaust gas recirculation by controlling a degree of opening of the EGR control valve, first oxygen proportion-obtaining means for obtaining a proportion of oxygen in intake air flowing through an EGR recirculation section of the intake passage which is downstream of the EGR control valve and at the same time upstream of the portion connected to the first EGR passage, as a first oxygen proportion, and target oxygen proportion-setting means for setting a target oxygen proportion as a target to which the obtained first oxygen proportion is to be controlled, wherein the exhaust gas recirculation amount control means controls the degree of opening of the EGR control valve such that the obtained first oxygen proportion becomes equal to the target oxygen proportion.

With the configuration of this EGR controller according to the first aspect of the present invention, the first EGR passage and the second EGR passage are each connected to the intake passage and the exhaust passage. The second EGR passage is connected to a portion of the intake passage upstream of the portion connected to the first EGR passage and a portion of the exhaust passage downstream of the portion connected to the first EGR passage. Part of exhaust gases discharged into the exhaust passage is recirculated to the intake passage via these first EGR passage and the second EGR passage. Further, the amount of exhaust gas recirculation via the second EGR passage is controlled by controlling the degree of opening of the EGR control valve.

Further, the proportion of oxygen in intake air flowing through the EGR recirculation section of the intake passage which is downstream of the EGR control valve and at the same time upstream of the portion connected to the first EGR passage is obtained as the first oxygen proportion, and the degree of opening of the EGR control valve is controlled such that the first oxygen proportion becomes equal to the target oxygen proportion. By doing so, the amount of exhaust gas recirculation via the second EGR passage is controlled whereby the first oxygen proportion is controlled to be equal to the target oxygen proportion. As described above, the first oxygen proportion in the EGR recirculation section i.e. in a section immediately before a confluence where the intake passage meets the fist EGR passage is controlled to be equal to the target oxygen proportion. Therefore, unlike the above-described conventional EGR controller, it is possible to eliminate the influence of response delay of exhaust gases occurring from the time when exhaust gases are recirculated to the intake passage from the second EGR passage to the time when the exhaust gases are supplied to the combustion chamber, thereby ensuring a stable combustion state. As a result, it is possible to maintain reduced exhaust emissions and excellent drivability.

Further, the EGR recirculation section is relatively long, so that the temperature of recirculated exhaust gases is liable to fall. Accordingly, even by recirculating a small amount of exhaust gases via the second EGR passage, it is possible to effectively suppress NOx generation. According to the present invention, exhaust gases are always recirculated via the second EGR passage such that the first oxygen proportion becomes equal to the target oxygen proportion. This makes it possible to achieve the maximum effect of suppression of NOx generation, while maintaining reduced exhaust emissions and excellent drivability.

The target oxygen proportion-setting means sets the target oxygen proportion such that a ratio of an amount of oxygen in the intake air flowing through the EGR recirculation section to an amount of inert gases in the intake air becomes constant.

Exhaust gases include not only inert gases but also oxygen unused for combustion in the combustion chamber and discharged therefrom. Therefore, the oxygen in intake air flowing through the EGR recirculation section also includes oxygen contained in exhaust gases in addition to oxygen contained in fresh air. From this point of view, according to the present invention, the target oxygen proportion is set such that the ratio of the amount of oxygen in the intake air flowing through the EGR recirculation section to the amount of inert gases in the same becomes constant. Accordingly, by using the target oxygen proportion to control the degree of opening of the EGR control valve, it is possible to make the net oxygen proportion of intake air always constant. Therefore, it is possible to ensure a more stable combustion, and as a result, it is possible to maintain further reduced exhaust emissions and more excellent drivability.

Preferably, the EGR controller further comprises second oxygen proportion-obtaining means for obtaining a proportion of oxygen in exhaust gases in the exhaust passage, as a second oxygen proportion, and the exhaust gas recirculation amount control means controls the degree of opening of the EGR control valve such that as the obtained second oxygen proportion is smaller, an amount of exhaust gas recirculation via the second EGR passage is made smaller.

As the proportion of oxygen in exhaust gases is smaller, the amount of inert gases contained in the exhaust gases is larger, and therefore even when the same amount of exhaust gases is recirculated via the second EGR passage, the proportion of oxygen in the EGR recirculation section is smaller. According to the present invention, as the second oxygen proportion, which is the obtained proportion of oxygen in exhaust gases, is smaller, the recirculation amount of exhaust gases via the second EGR passage is controlled to be smaller. With this configuration, a large amount of fresh air is taken in to increase the proportion of oxygen in intake air, whereby it is possible to properly control the first oxygen proportion, thereby maintaining further reduced exhaust emissions and more excellent drivability.

Preferably, the EGR controller further comprises operating region-determining means for determining an operating region of the engine, and the target oxygen proportion-setting means sets the target oxygen proportion in accordance with the determined operating region of the engine.

The proportion of oxygen necessary for maintaining reduced exhaust emissions and excellent drivability is different depending on the operating region of the engine, such as respective operating regions for normal operation, warm-up operation, and regeneration of a filter. From this point of view, according to the present invention, the target oxygen proportion is set based on the determined operating region of the engine, whereby it is possible to set an appropriate target oxygen proportion for each operating region. Therefore, by using the target oxygen proportion thus set to control of the degree of opening of the EGR control valve, it is possible to maintain reduced exhaust emissions and excellent drivability in each operating region of the engine.

More preferably, the operating region-determining means determines whether or not the engine is in warm-up operation, for determining the operating region of the engine, and when the engine is determined to be in warm-up operation, the target oxygen proportion-setting means sets the target oxygen proportion to a larger value than a value set when the engine is determined not to be in warm-up operation.

During warm-up operation of the engine, a larger amount of oxygen is required to ensure stable combustion. According to the present invention, when the engine is determined to be in warm-up operation, the target oxygen proportion is set to a larger value than a value set when the engine is determined not to be in warm-up operation. Therefore, it is possible to obtain oxygen necessary for combustion to thereby properly perform warm-up operation.

Preferably, the engine includes a supercharger, the supercharger including a turbine disposed in the exhaust passage, a compressor disposed in the intake passage, for rotation in unison with the turbine, and a boost pressure control valve disposed in the exhaust passage, for controlling a boost pressure, wherein the first EGR passage is connected to a portion of the exhaust passage upstream of the turbine, and wherein the second EGR passage is connected to a portion of the exhaust passage downstream of the turbine.

With the arrangement of this preferred embodiment, the first EGR passage is connected to the portion of the exhaust passage upstream of the turbine, and the second EGR passage is connected to the portion of the exhaust passage downstream of the turbine. Therefore, by recirculating exhaust gases via the second EGR passage, it is possible to reduce the amount of exhaust gases recirculation via the first EGR passage. This makes it possible to secure a sufficient amount of exhaust gases passing through the turbine, and while securing an excellent supercharging operation by the supercharger, it is possible to properly control the oxygen proportion.

To attain the above object, in a second aspect of the present invention, there is provided an EGR control method for an internal combustion engine in accordance with claim 5.
The engine includes a first EGR passage connected to an intake passage and an exhaust passage, for recirculating part of exhaust gases discharged into the exhaust passage, to the intake passage, a second EGR passage connected to a portion of the intake passage upstream of a portion thereof connected to the first EGR passage and a portion of the exhaust passage downstream of a portion thereof connected to the first EGR passage, for recirculating part of exhaust gases to the intake passage, and an EGR control valve disposed in at least one of the intake passage at a location in a vicinity of the portion connected to the second EGR passage, and the second EGR passage. The method comprises an exhaust gas recirculation amount control step of controlling an amount of exhaust gas recirculation by controlling a degree of opening of the EGR control valve, a first oxygen proportion-obtaining step of obtaining a proportion of oxygen in intake air flowing through an EGR recirculation section of the intake passage which is downstream of the EGR control valve and at the same time upstream of the portion connected to the first EGR passage, as a first oxygen proportion, and a target oxygen proportion-setting step of setting a target oxygen proportion as a target to which the obtained first oxygen proportion is to be controlled, wherein the exhaust gas recirculation amount control step includes controlling the degree of opening of the EGR control valve such that the obtained first oxygen proportion becomes equal to the target oxygen proportion.

With the configuration of this EGR control method according to the second aspect of the present invention, it is possible to obtain the same advantageous effects as provided by the first aspect of the present invention.

The above and other objects, features, and advantages of the present invention will become more apparent from the following detailed description taken in conjunction with the accompanying drawings.

BRIEF DESCRIPTION OF THE DRAWINGS

FIG. 1 is a schematic diagram of an internal combustion engine to which is applied the present invention;
FIG. 2 is a schematic block diagram of an EGR controller;
FIG. 3 is a flowchart showing a main flow of an EGR control process;
FIG. 4 is a flowchart showing a subroutine of a process for calculating a target low-pressure EGR amount;
FIG. 5 is a flowchart showing a subroutine of a process for limiting the target low-pressure EGR amount;
FIG. 6 is an example of a table for use in the process shown in FIG. 5;
FIG. 7 is a graph showing a relationship between an amount of oxygen and an amount of inert gases in intake air in a low-pressure EGR recirculation section; and
FIG. 8 is a graph showing a relationship between operating conditions of the engine and a first predetermined value and a second predetermined value that are set as a target oxygen concentration.

DETAILED DESCRIPTION OF PREFERRED EMBODIMENTS

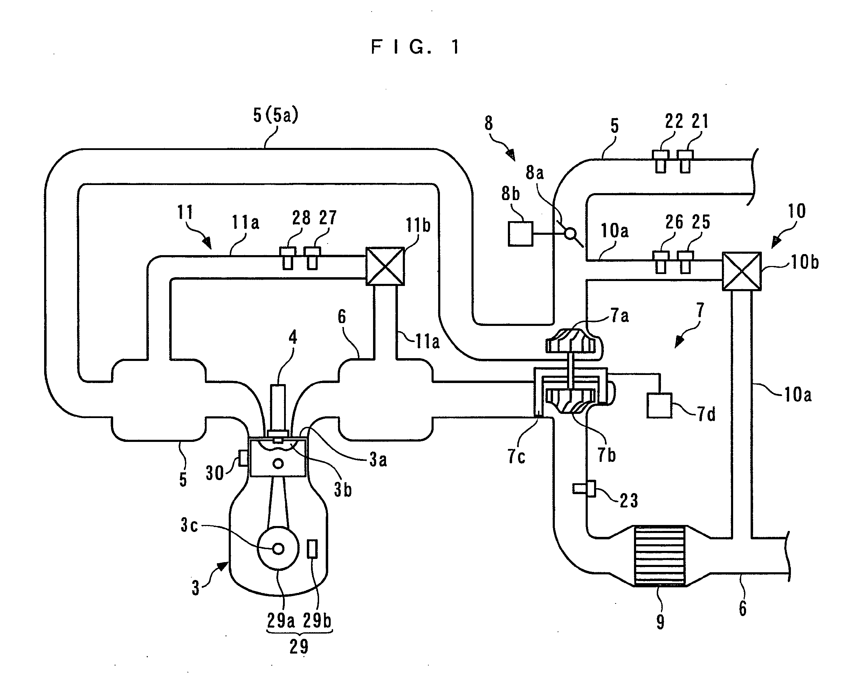

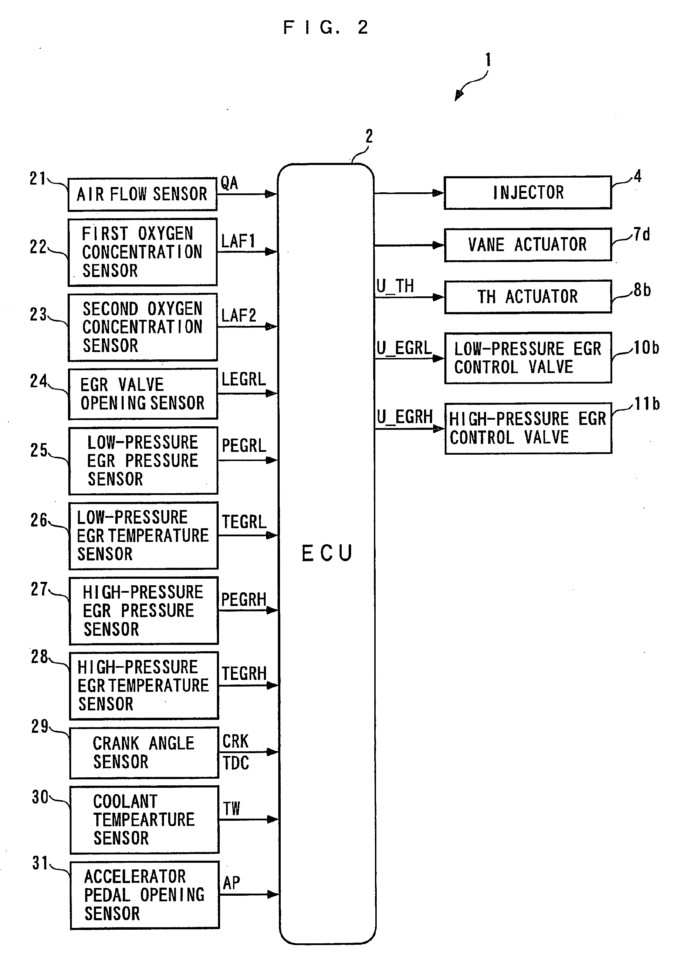

The invention will now be described in detail with reference to drawings showing a preferred embodiment thereof. As shown in FIG. 2, an EGR controller 1 according to the present embodiment includes an ECU 2 configured to perform various controlling processes described hereinafter, and is applied to an internal combustion engine (hereinafter referred to as "the engine") 3 shown in FIG. 1. The engine 3 is e.g. an in-line four-cylinder diesel engine installed on a vehicle (not shown), and includes a turbocharger 7, a low-pressure EGR device 10, a high-pressure EGR device 11, and so forth.

A cylinder head 3a of the engine 3 has a fuel injection valve (hereinafter referred to as "the injector") 4 mounted therethrough such that they face a combustion chamber 3b. The valve-opening time period and the valve-opening timing of the injector 4 are controlled by a drive signal from the ECU 2, whereby a fuel injection amount and fuel injection timing of fuel are controlled.

The turbocharger 7 is comprised of a compressor blade 7a disposed in an intake passage 5, a turbine blade 7b disposed in an exhaust passage 6, for rotation in unison with the compressor blade 7a, a plurality of variable vanes 7c (only two of which are shown), and a vane actuator 7d for actuating the variable vanes 7c.

In the turbocharger 7, as the turbine blade 7b is driven for rotation by exhaust gases flowing through the exhaust passage 6, the compressor blade 7a integrally formed with the turbine blade 7b rotates simultaneously with the rotation of the turbine blade 7b, whereby a supercharging operation for supercharging intake air is carried out.

The variable vanes 7c are pivotally mounted on a wall of a housing, not shown, accommodating the turbine blade 7b, and are mechanically connected to the vane actuator 7d. The degree of opening of the variable vanes 7c is controlled by the ECU 2 via the vane actuator 7d. As a consequence, as the amount of exhaust gases blown to the turbine blade 7b changes, the rotational speed of the turbine blade 7b and the compressor blade 7a is changed, whereby boost pressure is controlled.

An air flow sensor 21, a first oxygen concentration sensor 22, and a throttle valve mechanism 8 are arranged in the intake passage 5 of the engine 3 from upstream to downstream in the mentioned order. Out of these components, the air flow sensor 21 and the first oxygen concentration sensor 22 are disposed at respective locations upstream of the compressor blade 7a. The air flow sensor 21 detects an amount QA of intake air introduced into the engine 3 to deliver a signal indicative of the sensed intake air amount QA to the ECU 2. The first oxygen concentration sensor 22 linearly detects the oxygen concentration of fresh air as a first oxygen concentration LAF1 to deliver a signal indicative of the sensed first oxygen concentration LAF1 to the ECU 2.

The throttle valve mechanism 8 is comprised of a throttle valve 8a and a TH actuator 8b that actuates the throttle valve 8a. The throttle valve 8a is pivotally disposed in the intake passage 5 at a location upstream of the compressor blade 7a and at the same time immediately upstream of a portion of the intake passage 5 connected to a low-pressure EGR passage 10a, referred to hereinafter, of the low-pressure EGR device 10. The TH actuator 8b is a combination of a motor (not shown) and a reduction gear mechanism (not shown). The degree of opening of the throttle valve 8a is controlled via the TH actuator 8b in accordance with a control input U_TH from the ECU 2, whereby the amount of fresh air passing through the throttle valve 8a is controlled. It should be noted that the throttle valve 8a is normally controlled to be fully open.

A second oxygen concentration sensor 23 and a DPF (Diesel Particulate Filter) 9 are disposed in the exhaust passage 6 at a location downstream of the turbine blade 7b, from upstream to downstream in the mentioned order. The second oxygen concentration sensor 23 linearly detects the oxygen concentration of exhaust gases as a second oxygen concentration LAF2 to deliver a signal indicative of the sensed second oxygen concentration LAF2 to the ECU 2. The DPF 9 collects particulates, such as soot, from exhaust gases to thereby purify the exhaust gases.

Both of the above-mentioned low-pressure EGR device 10 and high-pressure EGR device 11 are provided for recirculating part of exhaust gases discharged from the engine 3 into the exhaust passage 6, to the intake passage 5.

The low-pressure EGR device 10 is comprised of the low-pressure EGR passage 10a connected to a portion of the intake passage 5 upstream of the compressor blade 7a and a portion of the exhaust passage 6 downstream of the turbine blade 7b, and a low-pressure EGR control valve 10b for opening and closing the low-pressure EGR passage 10a.

The low-pressure EGR control valve 10b is formed by an electromagnetic valve the valve lift of which is continuously changed, and is electrically connected to the ECU 2. The degree of opening of the low-pressure EGR control valve 10b is controlled in accordance with a control input U_EGRL from the ECU 2, whereby the amount of exhaust gas recirculation via the low-pressure EGR passage 10a (hereinafter referred to as "the low-pressure EGR amount") is controlled.

Further, an EGR valve opening sensor 24 is disposed in the low-pressure EGR passage 10a at a location in the vicinity of the low-pressure EGR control valve 10b (see FIG. 2). The EGR valve opening sensor 24 detects a degree of opening of the low-pressure EGR control valve 10b (hereinafter referred to as "the low-pressure EGR valve opening") LEGRL to deliver a signal indicative of the sensed low-pressure EGR valve opening LEGRL to the ECU 2.

Further, the low-pressure EGR passage 10a has a low-pressure EGR pressure sensor 25 and a low-pressure EGR temperature sensor 26 inserted therein. The low-pressure EGR pressure sensor 25 detects a pressure in the low-pressure EGR passage 10a (hereinafter referred to as "the low-pressure EGR pressure") PEGRL, and delivers a signal indicative of the sensed low-pressure EGR pressure PEGRL to the ECU 2. The low-pressure EGR temperature sensor 26 detects a temperature in the low-pressure EGR passage 10a (hereinafter referred to as "the low-pressure EGR temperature") TEGRL, and delivers a signal indicative of the sensed low-pressure EGR temperature TEGRL to the ECU 2.

The high-pressure EGR device 11 is comprised of a high-pressure EGR passage 11a connected to a portion of the intake passage 5 downstream of the compressor blade 7a and a portion of the exhaust passage 6 upstream of the turbine blade 7b, and a high-pressure EGR control valve 11b for opening and closing the high-pressure EGR passage 11a.

The high-pressure EGR control valve 11b is formed by an electromagnetic valve the valve lift of which is continuously changed, and is electrically connected to the ECU 2. The degree of opening of the high-pressure EGR control valve 11b is controlled in accordance with a control input U_EGRH from the ECU 2, whereby the amount of exhaust gas recirculation via the high-pressure EGR passage 11a (hereinafter referred to as "the high-pressure EGR amount") is controlled.

Further, the high-pressure EGR passage 11a has a high-pressure EGR pressure sensor 27 and a high-pressure EGR temperature sensor 28 inserted therein. The high-pressure EGR pressure sensor 27 detects a pressure in the high-pressure EGR passage 11a (hereinafter referred to as "the high-pressure EGR pressure") PEGRH, and delivers a signal indicative of the sensed high-pressure EGR pressure PEGRH to the ECU 2. The high-pressure EGR temperature sensor 28 detects a temperature in the high-pressure EGR passage 11a (hereinafter referred to as "the high-pressure EGR temperature") TEGRH, and delivers a signal indicative of the sensed high-pressure EGR temperature TEGRH to the ECU 2.

Further, the engine 3 is provided with a crank angle sensor 29. The crank angle sensor 29 is comprised of a magnet rotor 29a and an MRE (magnetic resistance element) pickup 29b, and delivers a CRK signal and a TDC signal, which are both pulse signals, to the ECU 2 in accordance with rotation of a crankshaft 3c.

Each pulse of the CRK signal is delivered whenever the crankshaft 3c rotates through a predetermined angle (e.g. 1°). The ECU 2 calculates a rotational speed of the engine 3 (hereinafter referred to as "the engine speed") NE based on the CRK signal. The TDC signal indicates that each piston in the associated cylinder is in a predetermined crank angle position slightly before the TDC position at the start of the intake stroke, and each pulse thereof is delivered whenever the crankshaft 3c rotates through 180° when the engine 3 is of a four-cylinder type as in the present embodiment.

The body of the engine 3 is provided with a coolant temperature sensor 30. The coolant temperature sensor 30 detects the temperature of engine coolant (hereinafter referred to as the "engine coolant temperature") TW circulating through a cylinder block (not shown) of the engine 3, and delivers a signal indicative of the sensed engine coolant temperature TW to the ECU 2.

Further, an accelerator pedal opening sensor 31 detects a stepped-on amount of an accelerator pedal (not shown) of the vehicle (hereinafter referred to as "the accelerator pedal opening") AP and delivers a signal indicative of the sensed accelerator pedal opening AP to the ECU 2.

The ECU 2 is implemented by a microcomputer comprised of a CPU, a RAM, a ROM and an I/O interface (none of which are specifically shown). The ECU 2 determines operating conditions of the engine 3 based on the signals from the aforementioned sensors 21 to 31, and depending on the determined operating conditions of the engine 3, performs control processes, such as a fuel injection control process and an EGR control process including control of the low-pressure EGR amount using the low-pressure EGR device 10 and the high-pressure EGR amount using the high-pressure EGR device 11.

In the present embodiment, the ECU 2 corresponds to exhaust gas recirculation amount control means, first oxygen proportion-obtaining means, target oxygen proportion-setting means, and operating region-determining means.

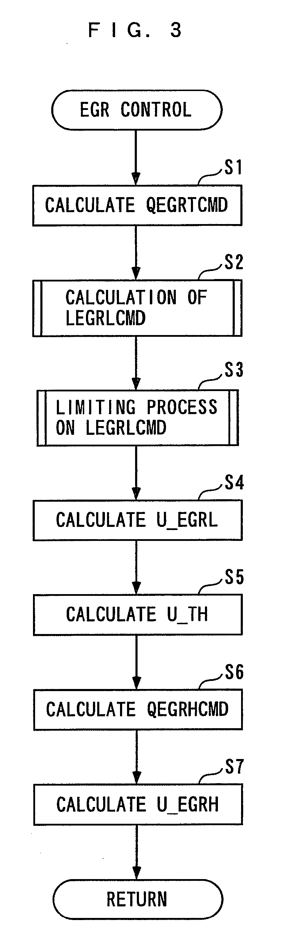

FIG. 3 is a flowchart showing the above-mentioned EGR control process. The EGR control process is executed whenever a predetermined time period elapses. In the present process, first, in a step 1 (shown as S1 in abbreviated form in FIG. 3; the following steps are also shown in abbreviated form), a target total EGR amount QEGRTCMD is calculated by searching a predetermined map (not shown) according to the engine speed NE and a demanded torque PMCMD. The target total EGR amount QEGRTCMD is a target value of the total amount of exhaust gases that is to be recirculated by the low-pressure EGR device 10 and the high-pressure EGR device 11. Further, the demanded torque PMCMD is calculated by searching a predetermined map (not shown) according to the engine speed NE and the accelerator pedal opening AP.

Next, there is calculated a target low-pressure EGR valve opening LEGRLCMD as a target to which the degree of opening of the low-pressure EGR control valve 10b is to be controlled (step 2).

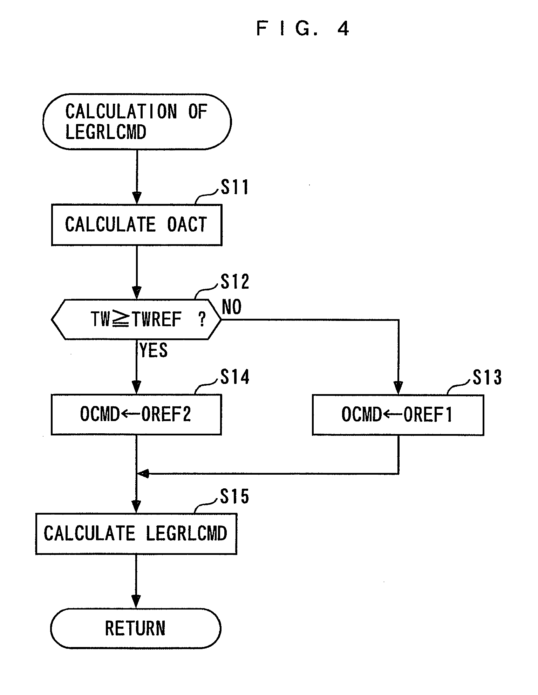

FIG. 4 is a subroutine of a process for calculating the target low-pressure EGR valve opening LEGRLCMD. In the present process, first, in a step 11, an actual oxygen concentration OACT of intake air (fresh air and exhaust gases recirculated via the low-pressure EGR passage 10a) flowing through a section of the intake passage 5 between the portion connected to the low-pressure EGR passage 10a and the portion connected to the high-pressure EGR passage 11a (hereinafter referred to as "the low-pressure EGR recirculation section") 5a is calculated using the detected

$$OACT = \frac{LAF1 \times QA + LAF2 \times QEGRL}{QA + QEGRL} \qquad \cdots\cdots (1)$$

intake air amount QA, the first oxygen concentration LAF1, the second oxygen concentration LAF2, and a low-pressure EGR amount QEGRL, referred to hereinafter, by the following equation (1):

> The low-pressure EGR amount QEGRL is calculated based on an equation of state of gas by using the low-pressure EGR pressure PEGRL detected by the low-pressure EGR pressure sensor 25 and the low-pressure EGR temperature TEGRL detected by the low-pressure EGR temperature sensor 26.

Next, it is determined whether or not the detected engine coolant temperature TW is not lower than a predetermined temperature TWREF (e.g. 50° C) (step 12). If the answer to the question of the step 12 is negative (NO), i.e. if the engine coolant temperature TW is lower than the predetermined temperature TWREF, it is determined that the engine 3 is in warm-up operation, and a first predetermined value OREF1 is set as a target oxygen concentration OCMD of intake air in the low-pressure EGR recirculation section 5a (step 13). The first predetermined value OREF1 is set to a fixed value smaller than the oxygen concentration of the atmosphere.

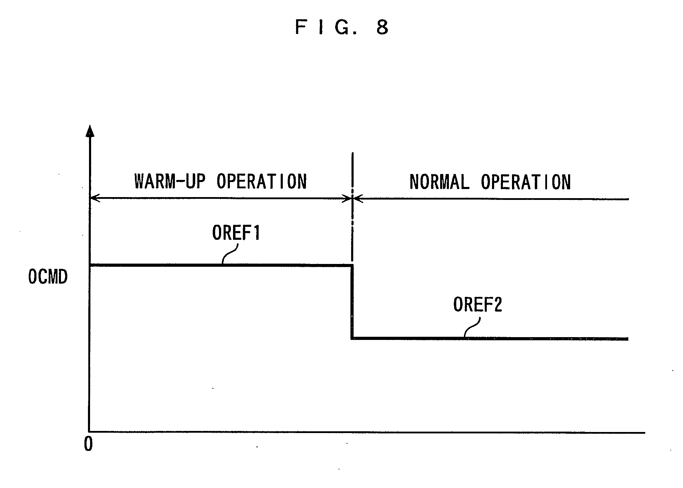

On the other hand, if the answer to the question of the step 12 is affirmative (YES), i.e. if TW $\geqq$ TWREF, it is determined that the engine 3 is not in warm-up operation, but in normal operation, and a second predetermined value OREF2 is set as the target oxygen concentration OCMD (step 14). The second predetermined value OREF2 is set to a fixed value smaller than the first predetermined value OREF1 that is set during the above-mentioned warm-up operation (see FIG. 8).

As described above, the target oxygen concentration OCMD is switched depending on whether the engine 3 is in warm-up operation or in normal operation. Further, during the warm-up operation, the target oxygen concentration OCMD is set to the larger value, which increases the proportion of oxygen, whereby it is possible to ensure stable combustion.

In a step 15 following the above-described step 13 or 14, the target low-pressure EGR valve opening LEGRLCMD is calculated by feedback control such that the actual oxygen concentration OACT calculated in the step 11 becomes equal to the set target oxygen concentration OCMD, followed by terminating the present process.

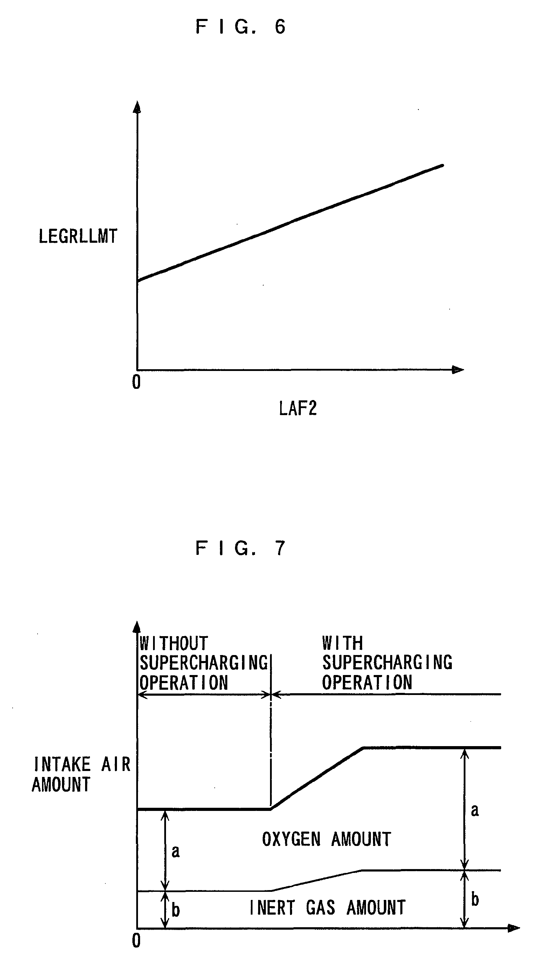

As described above, by setting the target oxygen concentration OCMD to the first predetermined value OREF1, which is fixed, or the second predetermined value OREF2, which is fixed, and performing control such that the actual oxygen concentration OACT becomes equal to the target oxygen concentration OCMD, the ratio of the amount of oxygen to the amount of inert gases (i.e. the ratio a:b in FIG. 7) in intake air in the low-pressure EGR recirculation section 5a is controlled to be a fixed value corresponding to the first predetermined value OREF1 in warm-up operation or the second predetermined value OREF2 in normal operation, irrespective of whether the supercharging by the turbocharger 7 is in operation and of the boost pressure.

Referring again to FIG. 3, in a step 3 following the above-described step 2, a limiting process is carried out on the calculated target low-pressure EGR valve opening LEGRLCMD.

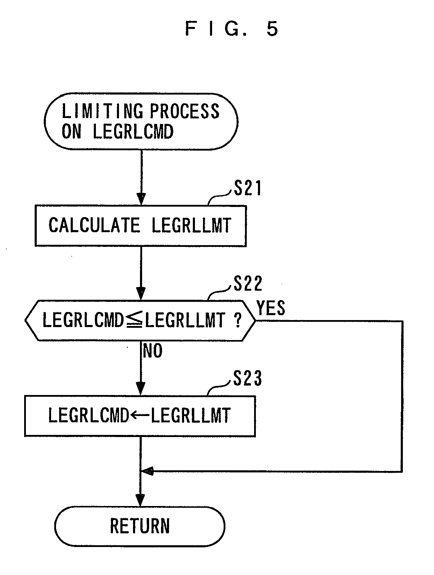

FIG. 5 is a subroutine of the limiting process carried out on the target low-pressure EGR valve opening LEGRLCMD. In the present process, first, in a step 21, an upper limit value LEGRLLMT of the target low-pressure EGR valve opening LEGRLCMD is calculated by searching the table shown in FIG. 6 according to the second oxygen concentration LAF2 detected by the second oxygen concentration sensor 23. In this table, as the second oxygen concentration LAF2 is lower, the amount of inert gases in exhaust gases is larger, and hence the upper limit value LEGRLLMT is set to a smaller value in order to prevent the oxygen concentration in the low-pressure EGR recirculation section 5a from becoming too low.

Next, it is determined whether or not the target low-pressure EGR valve opening LEGRLCMD is not larger than the upper limit value LEGRLLMT (step 22). If the answer to the question of the step 22 is affirmative (YES), the present process is immediately terminated, whereas if the answer to the question of the step 22 is negative (NO), i.e. if LEGRLCMD > LEGRLLMT, the target low-pressure EGR valve opening LEGRLCMD is set to the upper limit value LEGRLLMT (step 23), followed by terminating the present process.

Referring again to FIG. 3, in a step 4 following the above-described step 3, the control input U_EGRL of the low-pressure EGR control valve 10b is calculated based on the set target low-pressure EGR valve opening LEGRLCMD. The control input U_EGRL is delivered to the low-pressure EGR control valve 10b, whereby the low-pressure EGR valve opening LEGRL is controlled to the target low-pressure EGR valve opening LEGRLCMD.

Next, the control input U_TH of the throttle valve 8a is calculated (step 5). More specifically, in principle, the control input U_TH is calculated so as to keep the throttle valve 8a fully open. Further, when the low-pressure EGR valve opening LEGRL has been fully opened, and at the same time the actual oxygen concentration OACT has not converged to the target oxygen concentration OCMD, i.e. although the low-pressure EGR valve opening LEGRL is controlled to be fully open, the low-pressure EGR amount is insufficient so that the actual oxygen concentration OACT is higher than the target oxygen concentration OCMD, the control input U_TH is calculated by feedback control such that the actual oxygen concentration OACT becomes equal to the target oxygen concentration OCMD. More specifically, the control input U_TH is calculated such that as the actual oxygen concentration OACT is higher, the degree of opening of the throttle valve 8a is more closed, i.e. reduced. The control input U_TH is delivered to the TH actuator 8b, whereby the degree of opening of the throttle valve 8a is controlled. By doing so, the throttle valve 8a is controlled to the closing side, whereby the negative pressure in the intake passage 5 downstream of the throttle valve 8a is increased, causing a larger amount of exhaust gases to be recirculated to the intake passage 5 via the low-pressure EGR passage 10a, whereby the actual oxygen concentration OACT decreases to converge to the target oxygen concentration OCMD.

As described above, the oxygen concentration in the low-pressure EGR recirculation section 5a is basically controlled by the degree of opening of the low-pressure EGR control valve 10b, and after the low-pressure EGR control valve 10b has been fully opened, the oxygen concentration in the low-pressure EGR recirculation section 5a is controlled by the degree of opening of the throttle valve 8a, whereby the actual oxygen concentration OACT is controlled to be equal to the target oxygen concentration OCMD.

Next, a target high-pressure EGR amount QEGRHCMD is calculated by subtracting the low-pressure EGR amount QEGRL from the target total EGR amount QEGRTCMD calculated in the above-described step 1 (= QEGRTCMD - QEGRL) (step 6).

Then, the control input U_EGRH of the high-pressure EGR control valve 11b is calculated by feedback control such that a high-pressure EGR amount QEGRH converges to the target high-pressure EGR amount QEGRHCMD (step 7), followed by terminating the present process. It should be noted that the high-pressure EGR amount QEGRH is calculated based on the equation of state of gas by using the high-pressure EGR pressure PEGRH detected by the high-pressure EGR pressure sensor 27 and the high-pressure EGR temperature TEGRH detected by the high-pressure EGR temperature sensor 28. By doing so, the total amount of exhaust gases recirculated via the low-pressure EGR device 10 and the high-pressure EGR device 11 is controlled to be equal to the target total EGR amount QEGRTCMD.

As described above, according to the present embodiment, the low-pressure EGR control valve 10b and the throttle valve 8a are controlled such that the actual oxygen concentration OACT in the low-pressure EGR recirculation section 5a becomes equal to the target oxygen concentration OCMD. This makes it possible to eliminate the influence of response delay of exhaust gases occurring from the time when exhaust gases are recirculated to the intake passage 5 from the low-pressure EGR passage 10a to the time when the exhaust gases are supplied to the combustion chamber 3b, thereby ensuring stable combustion. As a result, it is possible to maintain reduced exhaust emissions and excellent drivability.

Further, exhaust gases at a lower temperature are always recirculated via the low-pressure EGR passage 10a. This makes it possible to achieve the maximum effect of suppression of NOx generation, thereby further reducing exhaust emissions.

Further, the target oxygen concentration OCMD is set to the first predetermined value OREF1 or the second predetermined value OREF2 dependent on an operating region (during warm-up operation or during operation other than warm-up operation), and hence, in each operating region, the ratio of the amount of oxygen in intake air to the amount of inert gases in the same in the low-pressure EGR recirculation section 5a becomes constant, whereby the net oxygen concentration of intake air can always be made constant. This makes it possible to ensure more stable combustion, and as a result, it is possible to maintain further reduced exhaust emissions and more excellent drivability.

Moreover, as the second oxygen concentration LAF2 representing the oxygen concentration of exhaust gases is lower, the upper limit value LEGRLLMT is set to a smaller value, whereby the opening of the low-pressure EGR control valve 10b is more strictly limited. As a consequence, the low-pressure EGR amount is controlled to be more reduced, whereby it is possible to take in a large amount of fresh air. By doing so, it is possible to increase the oxygen concentration in the low-pressure EGR recirculation section 5a and properly control the actual oxygen concentration OACT, and as a result, it is possible to maintain further reduced exhaust emissions and more excellent drivability.

Further, during warm-up operation of the engine 3, the target oxygen concentration OCMD is set to a larger value, whereby it is possible to obtain oxygen required for combustion to thereby properly perform the warm-up operation.

Further, exhaust gases are recirculated via the low-pressure EGR passage 10a in addition to the high-pressure EGR passage 11a, and therefore, it is possible to secure a sufficient amount of exhaust gases passing through the turbine blade 7b, and it is possible to properly control the oxygen concentration in the low-pressure EGR recirculation section 5a while ensuring an excellent supercharging operation by the turbocharger 7.

It should be noted that the present invention is by no means limited to the embodiment described above, but it can be practiced in various forms. For example, although in the above-described embodiment, both the low-pressure EGR control valve 10b and the throttle valve 8a are used as the low-pressure EGR control valve for control of the actual oxygen concentration OACT, only one of the low-pressure EGR control valve 10b and the throttle valve 8a may be used.

Although in the above-described embodiment, the actual oxygen concentration OACT of intake air in the low-pressure EGR recirculation section 5a is estimated by using the first oxygen concentration LAF1, the second oxygen concentration LAF2, and the low-pressure EGR amount QEGRL, this is not limitative, but the actual oxygen concentration OACT may be directly detected by using a sensor disposed in the low-pressure EGR recirculation section 5a. Further, although in the above-described embodiment, the oxygen concentration of exhaust gases is directly detected by using the second oxygen concentration sensor 23, this is not limitative, but the oxygen concentration of exhaust gases may be estimated by using a parameter having a close relationship to the oxygen concentration of exhaust gases. Also, although the second oxygen concentration LAF2 is detected upstream of the DPF 9, the second oxygen concentration LAF2 may be detected downstream of the DPF 9.

Further, although in the above-described embodiment, the target oxygen concentration OCMD is switched depending on whether the engine 3 is in warm-up operation or in normal operation, instead of this or in addition to this, the target oxygen concentration OCMD may be switched depending on whether or not the engine 3 is in other operating regions such as an operation region where the engine 3 is regenerating a catalyst or an operating region where the engine 3 is eliminating sulfur accumulated on a catalyst.

Further, although in the above-described embodiment, the supercharger is the turbocharger 7 comprised of the compressor blade 7a disposed in the intake passage 5 and the turbine blade 7b disposed in the exhaust passage 6, this is not limitative, but the supercharger may be one that has no turbine disposed in the exhaust passage. Further, in the above-described embodiment, the present invention is applied to an internal combustion engine having a supercharger, this is not limitative, but the present invention can be applied to an internal combustion engine having no supercharger.

Further, although in the above-described embodiment, the present invention is applied to a diesel engine installed on a vehicle, by way of example, this is not limitative, but the present invention can be applied not only to the diesel engine but also to various types of engines, such as a gasoline engine. Further, the present invention can also be applied to engines other than engines for vehicles, including engines for ship propulsion machines, such as an outboard motor having a vertically-disposed crankshaft.

An EGR controller for an internal combustion engine, which is capable of maintaining reduced exhaust emissions and excellent drivability while achieving the maximum effect of suppression of NOx generation. In the EGR controller, part of exhaust gases discharged into an exhaust passage is recirculated into an intake passage via a first EGR passage and a second EGR passage. Further, by controlling the degree of opening of an EGR control valve, the amount of exhaust gas recirculation is controlled. Further, the proportion of oxygen in intake air flowing through an EGR recirculation section of the intake passage which is downstream of the EGR control valve and upstream of a portion connected to the first EGR passage is obtained as a first oxygen proportion, and the degree of opening of the EGR control valve is controlled such that the first oxygen proportion becomes equal to a target oxygen proportion.

**Claims**

1. An EGR controller for an internal combustion engine, including:

   a first EGR passage (11) connected to an intake passage (5) and an exhaust passage (6), for recirculating part of exhaust gases discharged into the exhaust passage, to the intake passage,
   a second EGR passage (10) connected to a portion of the intake passage upstream of a portion thereof connected to the first EGR passage and a portion of the exhaust passage downstream of a portion thereof connected to the first EGR passage, for recirculating part of exhaust gases to the intake passage (5),
   an EGR control valve (10b, 8a) disposed in at least one of the intake passage at a location in a vicinity of the portion connected to the second EGR passage, and the second EGR passage,
   exhaust gas recirculation amount control means for controlling an amount of exhaust gas recirculation by controlling a degree of opening of the EGR control valve (10b, 8a);
   first oxygen proportion-obtaining means for obtaining a proportion of oxygen (OACT) in intake air flowing through an EGR recirculation section (5a) of the intake passage (5) which is downstream of the EGR control valve (10b, 8a) and at the same time upstream of the portion connected to the first EGR passage (11), as a first oxygen proportion (OACT); and
   target oxygen proportion-setting means for setting a target oxygen proportion (OCMD) as a target to which the obtained first oxygen proportion (OACT) is to be controlled,
   **characterized in that** said exhaust gas recirculation amount control means controls the degree of opening of the EGR control valve (10b, 8a) such that the obtained first oxygen proportion (OACT) becomes equal to the target oxygen proportion (OCMD), and
   wherein, if the engine coolant temperature (TW) is lower than the predetermined temperature (TWREF), it is determined that the engine (3) is in warm-up operation, and a first predetermined value (OREF1) is set as the target oxygen proportion (OCMD) of intake air in the EGR recirculation section (5a), whereas, if the engine coolant temperature (TW) is equal to or higher than the predetermined temperature (TWREF), it is determined that the engine (3) is in normal operation, and a second predetermined value (OREF2) smaller than the first predetermined value (OREF1) is set as the target oxygen proportion (OCMD).

2. The EGR controller as claimed in claim 1,
   wherein said target oxygen proportion-setting means sets the target oxygen proportion (OCMD) to a fixed predetermined value (OREF1, OREF2) and performs control such that the actual oxygen proportion (OACT) in the EGR recirculation section (5a) becomes equal to the target oxygen proportion (OCMD), so that a ratio of an amount of oxygen in the intake air flowing through the EGR recirculation section (5a) to an amount of inert gases in the intake air becomes constant.

3. The EGR controller as claimed in claim 1 or 2, further comprising second oxygen proportion-obtaining means (23) for obtaining a proportion of oxygen in exhaust gases in the exhaust passage (6), as a second oxygen proportion (LAF2), and
   wherein the exhaust gas recirculation amount control means controls the degree of opening of the EGR control valve (10b, 8a) as the obtained second oxygen proportion (LAF2) is smaller, so that an amount of exhaust gas recirculation via the second EGR passage (10) is made smaller.

4. The EGR controller as claimed in any one of claim 1 to claim 3, wherein the engine includes a supercharger (7), said supercharger including:

   a turbine (7b) disposed in the exhaust passage (6),
   a compressor (7a) disposed in the intake passage (5), for rotation in unison with said turbine, and
   a boost pressure control valve (7c, 7d) disposed in the exhaust passage, for controlling a boost pressure,
   wherein the first EGR passage (11) is connected to a portion of the exhaust passage (6) upstream of the turbine (7b), and
   wherein the second EGR passage (10) is connected to a portion of the exhaust passage (6) downstream of the turbine (7b).

5. An EGR control method for an internal combustion engine including a first EGR passage (11) connected to an intake passage (5) and an exhaust passage (6), for recirculating part of exhaust gases discharged into the exhaust passage, to the intake passage, a second EGR passage (10) connected to a portion of the intake passage upstream of a portion thereof connected to the first EGR passage and a portion of the exhaust passage downstream of a portion thereof connected to the first EGR passage, for recirculating part of exhaust gases to the intake passage (5), and an EGR control valve (10b, 8a) disposed in at least one of the intake passage at a location in a vicinity of the portion connected to the second EGR passage, and the second EGR passage,
comprising:

an exhaust gas recirculation amount control step of controlling an amount of exhaust gas recirculation by controlling a degree of opening of the EGR control valve (10b, 8a);

a first oxygen proportion-obtaining step of obtaining a proportion of oxygen (OACT) in intake air flowing through an EGR recirculation section (5a) of the intake passage (5) which is downstream of the EGR control valve (10b, 8a) and at the same time upstream of the portion connected to the first EGR passage (11), as a first oxygen proportion (OACT); and

a target oxygen proportion-setting step of setting a target oxygen proportion (OCMD) as a target to which the obtained first oxygen proportion (OACT) is to be controlled,

**characterized in that** said exhaust gas recirculation amount control step includes controlling the degree of opening of the EGR control valve (10b, 8a) such that the obtained first oxygen proportion becomes equal to the target oxygen proportion (OCMD), and

wherein, if the engine coolant temperature (TW) is lower than the predetermined temperature (TWREF), it is determined that the engine (3) is in warm-up operation, and a first predetermined value (OREF1) is set as the target oxygen proportion (OCMD) of intake air in the EGR recirculation section (5a), whereas, if the engine coolant temperature (TW) is equal to or higher than the predetermined temperature (TWREF), it is determined that the engine (3) is in normal operation, and a second predetermined value (OREF2) smaller than the first predetermined value (OREF1) is set as the target oxygen proportion (OCMD).

6. The EGR control method as claimed in claim 5,
wherein said target oxygen proportion-setting step sets the target oxygen proportion (OCMD) to a fixed predetermined value (OREF1, OREF2) and performs control such that the actual oxygen proportion (OACT) in the EGR recirculation section (5a) becomes equal to the target oxygen proportion (OCMD), so that a ratio of an amount of oxygen in the intake air flowing through the EGR recirculation section (5a) to an amount of inert gases in the intake air becomes constant.


**Patentansprüche**

1. AGR-Controller für einen Verbrennungsmotor, enthaltend:

einen ersten AGR-Kanal (11), der mit einem Einlasskanal (5) und einem Auslasskanal (6) verbunden ist, um einen Teil der in den Auslasskanal abgegebenen Abgase zum Einlasskanal rückzuführen,

einen zweiten AGR-Kanal (10), der mit einem Abschnitt des Einlasskanals stromauf eines mit dem ersten AGR-Kanal verbundenen Abschnitts davon und einem Abschnitt des Auslasskanals stromab eines mit dem ersten AGR-Kanal verbundenen Abschnitts davon verbunden ist, um einen Teil der Abgase zu dem Einlasskanal (5) rückzuführen,

ein AGR-Steuerventil (10b, 8a), das in dem Einlasskanal an einer Stelle in der Nähe des mit dem zweiten AGR-Kanal verbundenen Abschnitts und/oder dem zweiten AGR-Kanal angeordnet ist,

ein Abgasrückführmengensteuerungsmittel zum Steuern/Regeln einer Abgasrückführmenge zum Steuern/Regeln eines Öffnungsgrads des AGR-Steuerventils (10b, 8a);

ein erstes Sauerstoffanteilerhaltemittel zum Erhalten eines Sauerstoffanteils (OACT) in Einlassluft, die durch den AGR-Rückführabschnitt (5a) des Einlasskanals (5) fließt, der stromab des AGR-Steuerventils (10b, 8a) ist, und gleichzeitig stromauf des mit dem ersten AGR-Kanals (11) verbundenen Abschnitts, als ersten Sauerstoffanteil (OACT); und

ein Soll-Sauerstoffanteilsetzmittel zum Setzen eines Soll-Sauerstoffanteils (OCMD) als Sollwert, auf den erhaltene Sauerstoffanteil (OACT) zu steuern/zu regeln ist,

**dadurch gekennzeichnet, dass** das Abgasrückführmengensteuerungsmittel den Öffnungsgrad des AGR-Steuerventils (10b, 8a) derart steuert/regelt, dass der erhaltene erste Sauerstoffanteil (OACT) gleich dem Soll-Sauerstoffanteil (OCMD) wird, und

worin, wenn die Motorkühlmitteltemperatur (TW) niedriger als die vorbestimmte Temperatur (TWREF) ist, bestimmt wird, dass der Motor (3) im Aufwärmbetrieb ist, und ein erster vorbestimmter Wert (OREF1) als der Soll-Sauerstoffanteil (OCMD) von Einlassluft in dem AGR-Rückführabschnitt (5a) gesetzt wird, wohingegen, wenn die Motorkühlmitteltemperatur (TW) gleich oder höher als die vorbestimmte Temperatur (TREF) ist, bestimmt wird, dass der Motor (3) im Normalbetrieb ist, und

ein zweiter vorbestimmter Wert (OREF2), der kleiner als der erste vorbestimmte Wert (OREF1) ist, als der Soll-Sauerstoffanteil (OCMD) gesetzt wird.

**2.** Der AGR-Controller nach Anspruch 1,

worin das Soll-Sauerstoffanteilsetzmittel den Soll-Sauerstoffanteil (OCMD) auf einen festen vorbestimmten Wert (OREF1, OREF2) setzt und eine derartige Steuerung/Regelung ausführt, dass der Ist-Sauerstoffanteil (OACT) in dem AGR-Rückführabschnitt (5a) gleich dem Soll-Sauerstoffanteil (OCMD) wird, so dass das Verhältnis einer Sauerstoffmenge in der durch den AGR-Rückführabschnitt (5a) fließenden Einlassluft zu einer Menge von Inertgasen in der Einlassluft konstant wird.

**3.** Der AGR-Controller nach Anspruch 1 oder 2, der ferner ein zweites Sauerstoffanteilerhaltemittel (23) aufweist, um einen Anteil von Sauerstoff in Abgasen in dem Auslasskanal (6) als zweiten Sauerstoffanteil (LAF2) zu erhalten, und worin das Abgasrückführmengensteuerungsmittel den Öffnungsgrad des AGR-Steuerventils (10b, 8a) steuert/regelt, wenn der erhaltene zweite Sauerstoffanteil (LAF2) kleiner wird, so dass eine Abgasrückführmenge über den zweiten AGR-Kanal (10) kleiner gemacht wird.

**4.** Der AGR-Controller nach einem der Ansprüche 1 bis 3,

worin der Motor einen Lader (7) enthält,

wobei der Lader enthält:

eine Turbine (7b), die in dem Auslasskanal (6) angeordnet ist,

einen Kompressor (7a), der in dem Einlasskanal (5) angeordnet ist, und

sich gemeinsam mit der Turbine zu drehen, und

ein Ladedrucksteuerventil (7c, 7d), das in dem Auslasskanal angeordnet ist, um einen Ladedruck zu steuern/regeln,

worin der erste AGR-Kanal (11) mit einem Abschnitt des Auslasskanals (6) stromauf der Turbine (7b) verbunden ist, und

worin der zweite AGR-Kanal (10) mit einem Abschnitt des Auslasskanals (6) stromab der Turbine (7b) verbunden ist.

**5.** AGR-Steuerungsverfahren für einen Verbrennungsmotor, enthaltend:

einen ersten AGR-Kanal (11), der mit einem Einlasskanal (5) und einem Auslasskanal (6) verbunden ist, um einen Teil der in den Auslasskanal abgegebenen Abgase zum Einlasskanal rückzuführen,

einen zweiten AGR-Kanal (10), der mit einem Abschnitt des Einlasskanals stromauf eines mit dem ersten AGR-Kanal verbundenen Abschnitts davon und einem Abschnitt des Auslasskanals stromab eines mit dem ersten AGR-Kanal verbundenen Abschnitts davon verbunden ist, um einen Teil der Abgase zu dem Einalsskanal (5) rückzuführen,

ein AGR-Steuerventil (10b, 8a), das in dem Einlasskanal an einer Stelle in der Nähe des mit dem zweiten AGR-Kanal verbundenen Abschnitts und/oder dem zweiten AGR-Kanal angeordnet ist,

umfassend:

einen Abgasrückführmengensteuerungsschritt zum Steuern/Regeln einer Abgasrückführmenge durch Steuern/Regeln eines Öffnungsgrad des AGR-Steuerventils (10b, 8a);

einen ersten Sauerstoffanteilerhalteschritt zum Erhalten eines Sauerstoffanteils (OACT) in der Einlassluft, die durch den AGR-Rückführabschnitt (5a) des Einlasskanals (5) fließt, der stromab des AGR-Steuerventils (10b, 8a) ist, und gleichzeitig stromauf des mit dem ersten AGR-Kanals (11) verbundenen Abschnitts, als ersten Sauerstoffanteil (OACT); und

einen Soll-Sauerstoffanteilsetzschritt zum Setzen eines Soll-Sauerstoffanteils (OCMD) als Sollwert, auf den erhaltene Sauerstoffanteil (OACT) zu steuern/zu regeln ist,

**dadurch gekennzeichnet, dass** der Abgasrückführmengensteuerungsschritt enthält, den Öffnungsgrad des AGR-Steuerventils (10b, 8a) derart zu steuern/regeln, dass der erhaltene erste Sauerstoffanteil (OACT) gleich dem Soll-Sauerstoffanteil (OCMD) wird, und

worin, wenn die Motorkühlmitteltemperatur (TW) niedriger als die vorbestimmte Temperatur (TWREF) ist, bestimmt wird, dass der Motor (3) im Aufwärmbetrieb ist, und ein erster vorbestimmter Wert (OREF1) als der Soll-Sauerstoffanteil (OCMD) von Einlassluft in dem AGR-Rückführabschnitt (5a) gesetzt wird, wohingegen, wenn die Motorkühlmitteltemperatur (TW) gleich oder höher als die vorbestimmte Temperatur

**12**

(TREF) ist, bestimmt wird, dass der Motor (3) im Normalbetrieb ist, und

ein zweiter vorbestimmter Wert (OREF2), der kleiner als der erste vorbestimmte Wert (OREF1) ist, als der Soll-Sauerstoffanteil (OCMD) gesetzt wird.

6. Das AGR-Steuerungsverfahren nach Anspruch 5,
worin der Soll-Sauerstoffanteilsetzschritt den Soll-Sauerstoffanteil (OCMD) auf einen festen vorbestimmten Wert (OREF1, OREF2) setzt und eine derartige Steuerung/Regelung ausführt, dass der Ist-Sauerstoffanteil (OACT) in dem AGR-Rückführabschnitt (5a) gleich dem Soll-Sauerstoffanteil (OCMD) wird, so dass das Verhältnis einer Sauerstoffmenge in der durch den AGR-Rückführabschnitt (5a) fließenden Einlassluft zu einer Menge von Inertgasen in der Einlassluft konstant wird.

**Revendications**

1. Contrôleur EGR pour un moteur à combustion interne, incluant:

un premier passage EGR (11) connecté à un passage d'admission (5) et un passage d'échappement (6), pour recirculer une partie des gaz d'échappement déchargés dans le passage d'échappement vers le passage d'admission,

un deuxième passage EGR (10) connecté à une partie du passage d'admission en amont d'une partie de celui-ci connectée au premier passage EGR et à une partie du passage d'échappement en aval d'une partie de celui-ci connectée au premier passage EGR, pour recirculer une partie des gaz d'échappement vers le passage d'admission (5),

une vanne de régulation EGR (10b, 8a) disposée dans au moins un des passages d'admission à un emplacement situé à proximité de la partie connectée au deuxième passage EGR et du deuxième passage EGR,

un moyen de contrôle de la quantité de recirculation de gaz d'échappement pour contrôler une quantité de recirculation de gaz d'échappement en commandant un taux d'ouverture de la vanne de régulation EGR (10b, 8a);

un premier moyen d'obtention d'une proportion d'oxygène afin d'obtenir une proportion d'oxygène (OACT) dans l'air d'admission s'écoulant à travers une section de recirculation EGR (5a) du passage d'admission (5) qui est en aval de la vanne de régulation EGR (10b, 8a) et en même temps en amont de la partie connectée au premier passage EGR (11), comme première proportion d'oxygène (OACT); et

un moyen de réglage d'une proportion d'oxygène à atteindre pour une proportion d'oxygène à atteindre (OCMD) comme objectif à atteindre avec laquelle la première proportion d'oxygène obtenue (OACT) doit être contrôlée, **caractérisé en ce que** ledit moyen de contrôle de la quantité de recirculation de gaz d'échappement commande le taux d'ouverture de la vanne de régulation EGR (10b, 8a) de telle façon que la première proportion d'oxygène obtenue (OACT) devienne égale à la proportion d'oxygène à atteindre (OCMD), et

dans lequel, si la température du liquide de refroidissement du moteur (TW) est inférieure à la température prédéterminée (TWREF), il est déterminé que le moteur (3) est en fonctionnement d'échauffement et une première valeur prédéterminée (OREF1) est définie comme la proportion d'oxygène à atteindre (OCMD) de l'air d'admission dans la section de recirculation EGR (5a), tandis que si la température du liquide de refroidissement du moteur (TW) est égale ou supérieure à la température prédéterminée (TWREF), il est déterminé que le moteur (3) est en fonctionnement normal et une deuxième valeur prédéterminée (OREF2) plus petite que la première valeur prédéterminée (OREF1) est définie comme la proportion d'oxygène à atteindre (OCMD).

2. Contrôleur EGR suivant la revendication 1,
dans lequel ledit moyen de réglage de la proportion d'oxygène à atteindre règle la proportion d'oxygène à atteindre (OCMD) à une valeur fixe prédéterminée (OREF1, OREF2) et effectue le contrôle de telle façon que la proportion actuelle d'oxygène (OACT) dans la section de recirculation EGR (5a) devienne égale à la proportion d'oxygène à atteindre (OCMD), de telle façon qu'un rapport d'une quantité d'oxygène dans l'air d'admission s'écoulant à travers la section de recirculation EGR (5a) sur une quantité de gaz inertes dans l'air d'admission devienne constant.

3. Contrôleur EGR suivant la revendication 1 ou 2, comprenant en outre un deuxième moyen d'obtention d'une proportion d'oxygène (23) pour obtenir une proportion d'oxygène dans les gaz d'échappement dans le passage d'échappement (6), comme deuxième proportion d'oxygène (LAF2), et
dans lequel le moyen de contrôle de la quantité de recirculation de gaz d'échappement commande le taux d'ouverture de la vanne de régulation EGR (10b, 8a) lorsque la deuxième proportion d'oxygène obtenue (LAF2) est plus petite, de façon à ce qu'une quantité de recirculation de gaz d'échappement via le deuxième passage EGR (10) devienne plus petite.

4. Contrôleur EGR suivant l'une des revendications 1 à 3,
dans lequel le moteur comprend un compresseur de suralimentation (7),
ledit compresseur de suralimentation incluant:

une turbine (7b) disposée dans le passage d'échappement (6),
un compresseur (7a) disposé dans le passage d'admission (5), pour la rotation à l'unisson avec ladite turbine, et
une vanne de régulation de la pression de suralimentation (7c, 7d) disposée dans le passage d'échappement,
pour réguler une pression de suralimentation,
dans lequel le premier passage EGR (11) est connecté à une partie du passage d'échappement (6) en amont
de la turbine (7b), et
dans lequel le deuxième passage EGR (10) est connecté à une partie du passage d'échappement (6) en aval
de la turbine (7b).

5. Procédé de contrôle EGR pour un moteur à combustion interne, incluant un premier passage EGR (11) connecté
à un passage d'admission (5) et un passage d'échappement (6), pour recirculer une partie des gaz d'échappement
déchargés dans le passage d'échappement vers le passage d'admission, un deuxième passage EGR (10) connecté
à une partie du passage d'admission en amont d'une partie de celui-ci connectée au premier passage EGR et à
une partie du passage d'échappement en aval d'une partie de celui-ci connectée au premier passage EGR, pour
recirculer une partie des gaz d'échappement vers le passage d'admission (5), et une vanne de régulation EGR
(10b, 8a) disposée dans au moins un des passages d'admission à un emplacement situé à proximité de la partie
connectée au deuxième passage EGR et du deuxième passage EGR, comprenant
une étape de contrôle de la quantité de recirculation de gaz d'échappement pour contrôler une quantité de recirculation de gaz d'échappement en commandant un taux d'ouverture de la vanne de régulation EGR (10b, 8a);
une première étape d'obtention d'une proportion d'oxygène afin d'obtenir une proportion d'oxygène (OACT) dans
l'air d'admission s'écoulant à travers une section de recirculation EGR (5a) du passage d'admission (5) qui est en
aval de la vanne de régulation EGR (10b, 8a) et en même temps en amont de la partie connectée au premier
passage EGR (11), comme première proportion d'oxygène (OACT); et
une étape de réglage d'une proportion d'oxygène à atteindre pour une proportion d'oxygène à atteindre (OCMD)
comme objectif à atteindre avec laquelle la première proportion d'oxygène obtenue (OACT) doit être contrôlée,
**caractérisé en ce que** ladite étape de contrôle de la quantité de recirculation de gaz d'échappement inclut la
commande du taux d'ouverture de la vanne de régulation EGR (10b, 8a) tel que la première proportion d'oxygène
obtenue (OACT) devienne égale à la proportion d'oxygène à atteindre (OCMD), et
dans lequel, si la température du liquide de refroidissement du moteur (TW) est inférieure à la température prédéterminée (TWREF), il est déterminé que le moteur (3) est en fonctionnement d'échauffement et une première valeur
prédéterminée (OREF1) est définie comme la proportion d'oxygène à atteindre (OCMD) de l'air d'admission dans
la section de recirculation EGR (5a), tandis que si la température du liquide de refroidissement du moteur (TW) est
égale ou supérieure à la température prédéterminée (TWREF), il est déterminé que le moteur (3) est en fonctionnement normal et une deuxième valeur prédéterminée (OREF2) plus petite que la première valeur prédéterminée
(OREF1) est définie comme la proportion d'oxygène à atteindre (OCMD).

6. Procédé de contrôle EGR suivant la revendication 5,
dans lequel ladite étape de réglage de la proportion d'oxygène à atteindre règle la proportion d'oxygène à atteindre
(OCMD) à une valeur fixe prédéterminée (OREF1, OREF2) et effectue le contrôle de telle façon que la proportion
actuelle d'oxygène (OACT) dans la section de recirculation EGR (5a) devienne égale à la proportion d'oxygène à
atteindre (OCMD), de telle façon qu'un rapport d'une quantité d'oxygène dans l'air d'admission s'écoulant à travers
la section de recirculation EGR (5a) sur une quantité de gaz inertes dans l'air d'admission devienne constant.

FIG. 1

FIG. 2

1

2

| 21 | AIR FLOW SENSOR | QA → | | | |
|---|---|---|---|---|---|

ECU

INJECTOR — 4

VANE ACTUATOR — 7d

U_TH → TH ACTUATOR — 8b

U_EGRL → LOW-PRESSURE EGR CONTROL VALVE — 10b

U_EGRH → HIGH-PRESSURE EGR CONTROL VALVE — 11b

21 — AIR FLOW SENSOR — QA

22 — FIRST OXYGEN CONCENTRATION SENSOR — LAF1

23 — SECOND OXYGEN CONCENTRATION SENSOR — LAF2

24 — EGR VALVE OPENING SENSOR — LEGRL

25 — LOW-PRESSURE EGR PRESSURE SENSOR — PEGRL

26 — LOW-PRESSURE EGR TEMPERATURE SENSOR — TEGRL

27 — HIGH-PRESSURE EGR PRESSURE SENSOR — PEGRH

28 — HIGH-PRESSURE EGR TEMPERATURE SENSOR — TEGRH

29 — CRANK ANGLE SENSOR — CRK TDC

30 — COOLANT TEMPEARTURE SENSOR — TW

31 — ACCELERATOR PEDAL OPENING SENSOR — AP

F I G.   3

```
        ┌──────────────────┐
        │   EGR CONTROL    │
        └──────────────────┘
                 │
                 ▼           S1
        ┌──────────────────┐
        │ CALCULATE QEGRTCMD│
        └──────────────────┘
                 │
                 ▼           S2
        ┌──────────────────┐
        │ CALCULATION OF   │
        │ LEGRLCMD         │
        └──────────────────┘
                 │
                 ▼           S3
        ┌──────────────────┐
        │ LIMITING PROCESS │
        │ ON LEGRLCMD      │
        └──────────────────┘
                 │
                 ▼           S4
        ┌──────────────────┐
        │ CALCULATE U_EGRL │
        └──────────────────┘
                 │
                 ▼           S5
        ┌──────────────────┐
        │ CALCULATE U_TH   │
        └──────────────────┘
                 │
                 ▼           S6
        ┌──────────────────┐
        │ CALCULATE QEGRHCMD│
        └──────────────────┘
                 │
                 ▼           S7
        ┌──────────────────┐
        │ CALCULATE U_EGRH │
        └──────────────────┘
                 │
                 ▼
        ┌──────────────────┐
        │     RETURN       │
        └──────────────────┘
```

F I G. 4

```
        ╭─────────────────────╮
        │  CALCULATION OF     │
        │  LEGRLCMD           │
        ╰─────────────────────╯
                   │
                   ▼           S11
        ┌─────────────────────┐
        │  CALCULATE  OACT    │
        └─────────────────────┘
                   │
                   ▼           S12
              ╱─────────╲        NO
        ⟨  TW≧TWREF  ? ⟩─────────────────┐
              ╲─────────╱                │
                   │ YES                 │
                   ▼           S14       ▼           S13
        ┌─────────────────────┐   ┌─────────────────────┐
        │  OCMD←OREF2         │   │  OCMD←OREF1         │
        └─────────────────────┘   └─────────────────────┘
                   │◄───────────────────────┘
                   ▼           S15
        ┌─────────────────────┐
        │  CALCULATE LEGRLCMD │
        └─────────────────────┘
                   │
                   ▼
        ╭─────────────────────╮
        │      RETURN         │
        ╰─────────────────────╯
```

18

F I G. 5

LIMITING PROCESS
ON LEGRLCMD

S21

CALCULATE LEGRLLMT

S22

LEGRLCMD ≦ LEGRLLMT ? — YES

NO

S23

LEGRLCMD ← LEGRLLMT

RETURN

F I G. 6

LEGRLLMT

LAF2

F I G. 7

WITHOUT SUPERCHARGING OPERATION | WITH SUPERCHARGING OPERATION

INTAKE AIR AMOUNT

a

OXYGEN AMOUNT

a

INERT GAS AMOUNT

b

b

0

F I G. 8

WARM-UP OPERATION | NORMAL OPERATION

OREF1

OCMD

OREF2

0

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007127037 A

**Non-patent literature cited in the description**

- Air fraction estimation for multiple combustion mode diesel engines with dual-loop EGR systems. **WANG et al.** CONTROL ENGINEERING PRACTICE. PER-GAMON PRESS, 01 December 2008, vol. 16, 1479-1486

- Der neue 2,0-I-TDI-Motor von Volkswagen für niedrigste Abgasgrenzwerte - Teil 1. **HADLER J et al.** MTZ MOTORTECHNISCHE ZEITSCHRIFT. VIEWEG VERLAG, 01 May 2008, vol. 69, 386-395